# EUROPÄISCHE PATENTSCHRIFT

(11) **EP 2 110 238 B1**
(45) Veröffentlichungstag und Bekanntmachung des Hinweises auf die Patenterteilung: **01.12.2010**
(21) Anmeldenummer: 09154338.9
(22) Anmeldetag: 04.03.2009
(51) Int. Cl.: B32B 17/10, E06B 5/12, F41H 5/26, F41H 5/04

(54) **Sprengwirkungshemmender Scheibenaufbau**
Blast effect-limiting glazing structure
Montage de vitrage réduisant l'effet d'éclatement

(30) Priorität: 17.04.2008 DE 202008005366 U
(43) Veröffentlichungstag der Anmeldung: 21.10.2009
(73) Patentinhaber: Sälzer Sicherheitstechnik GmbH, 35037 Marburg (DE)
(72) Erfinder: Sälzer, Heinrich, 35037, Marburg (DE)
(74) Vertreter: Bauer, Dirk

(56) Entgegenhaltungen:
- EP-A- 0 053 774
- DE-A1- 2 125 693
- DE-A1- 2 524 241
- US-A1- 2007 218 262

## Beschreibung

Die Erfindung betrifft einen Scheibenaufbau einer insbesondere sprengwirkungshemmenden Isolierglasscheibe mit einer ersten, einer Angriffsseite zugewandten Scheibenanordnung, einer zweiten Scheibenanordnung, die durch einen ersten gasgefüllten Zwischenraum von der ersten Scheibenanordnung getrennt ist und einer dritten, einer Schutzseite zugewandten Scheibenanordnung, die durch einen zweiten gasgefüllten Zwischenraum von der zweiten Scheibenanordnung getrennt ist, wobei alle Scheibenanordnungen parallel zu einander verlaufen und mittels randseitig umlaufender Abstandhalter miteinander verbunden sind, und wobei zumindest die dritte Scheibenanordnung eine Verbundscheibe ist, die aus mindestens zwei, jeweils mittels einer Klebeschicht miteinander verbundenen Scheiben besteht

Isolierglasscheiben für Fenster zur Wärme- und Schalldämmung sind allgemein bekannt. Dabei werden zwei oder mehrere Flachglasscheiben planparallel und durch Abstandshalter mit einem Zwischenraum versehen miteinander verbunden. Für eine möglichst hohe Wärme- und Schalldämmung wird der Zwischenraum mit einem Gas mit geringem Wärmedurchgangskoeffizienten wie zum Beispiel Argon oder Krypton befüllt.

Solche Isolierglasscheiben sind als Weiterentwicklung als durchschuss- beziehungsweise explosionshemmende Glasscheibenanordnungen für Gebäudeöffnungen zum Beispiel aus den Druckschriften DE 2524241 A1, DE 2901951 A1 und DE 202005016189 U1 bekannt. In diesen Druckschriften werden in erster Linie ein Scheibenaufbau aus zwei Scheibenanordnungen beschrieben, wobei die einzelnen Scheibenanordnungen aus Einzelscheiben oder auch aus Verbundsicherheitsglasscheiben bestehen können. In der Druckschrift DE 2524241 A1 wird zudem ein Scheibenaufbau mit einer dreifachen Scheibenanordnung beschrieben, bei der die dritte Scheibenanordnung als Splitterfangscheibe für von der zweiten Scheibenanordnung abgehende Splitter dient, und die aus Zweischeiben-Verbundglas besteht.

Diese Zweifach- beziehungsweise Dreifach-Verglasungen haben jedoch den Nachteil, dass ihre sprengwirkungshemmenden Eigenschaften oftmals nicht ausreichend sind, da sie in erster Linie auf Beschusshemmung hin optimiert sind.

Aus der DE 21 25 693 A1 ist ein Scheibenaufbau mit drei parallelen Scheibenanordnungen bekannt, von denen die beiden äußeren jeweils dicker ausgebildet sind als die in der Mitte befindliche Scheibenanordnung. Um eine gute Beschusshemmung zu gewährleisten, also um einen ersten, besonders starken Anprall weitgehend zu verhindern, ist die der Angriffseite zugewandte Scheibenanordnung am dicksten ausgebildet.

Ferner ist aus der EP 0 253 774 A1 eine sprengwirkungshemmende Verglasung bekannt, wobei sich deren Scheibenaufbau dadurch auszeichnet, dass die einzelnen parallel zueinander angeordneten Scheibenanordnungen jeweils in einem separaten Stahlrahmen eingesetzt sind. Hierbei ist es wesentlich, dass sich zwischen den einzelnen Scheibenanordnurtgen und ihren zugeordneten Stahlrahmen eine nachgiebige Zwischenschicht befindet, so dass die einzelnen Scheibenanordnungen jeweils federnd gelagert sind. Die Anordnung dieser bekannten Verglasung in einem herkömmlichen Rahmensystem ist jedoch nicht möglich.

### Aufgabe

Aufgabe der vorliegenden Erfindung ist es daher, ausgehend von den aus dem Stand der Technik her bekannten explosionshemmenden beziehungsweise wärme- und schallisolierenden Verglasungen eine sprengwirkungshemmende Isolierglasscheibenvorrichtung zu entwickeln, die in einem gemeinsamen Rahmensystem eingesetzt werden kann und die bei einer Explosion eine wesentlich bessere Abdämpfung bietet und zudem gute wärme- und schallisolierende Eigenschaften besitzt. Gleichfalls sollen auch die einbruchhemmenden Eigenschaften möglichst verbessert werden.

### Lösung

Ausgehend von dem bekannten Aufbau einer sprengwirkungshemmenden Isolierverglasung wird erfindungsgemäß vorgeschlagen, dass die Dicke der dritten Scheibenanordnung größer als die Dicke der ersten Scheibenanordnung ist und dass die erste Scheibenanordnung und/oder die zweite Scheibenanordnung jeweils eine Verbundscheibe aus mindestens zwei Scheiben ist bzw. sind. Bei einer, wie in der Einleitung beschriebenen, dreiteiligen Scheibenanordnung wird im Falle einer Explosion die erste Scheibenanordnung gegen die zweite Scheibenanordnung gedrückt und diese dadurch gegen die dritte Scheibenanordnung. Bei der dabei auftretenden Durchbiegung der ersten und zweiten Scheibenanordnung wird ein Teil der Explosionsenergie verbraucht. Wichtig ist hierbei, dass die dritte Scheibenanordnung in der Lage ist, dem durch die beiden vorgelagerten Scheibenanordnungen ausgeübten Druck zusammen mit dem Explosionsrestdruck standzuhalten. Werden für die dritte Scheibenanordnung daher mehrere miteinander verklebte Scheiben verwendet, so erhält man eine entsprechend große Materialstärke, die diesem Gesamtdruck flexibel widerstehen kann. Sollte zudem die erste und/oder die zweite Scheibenanordnung bei einer Explosion zerstört werden, so kann immerhin die dritte Scheibenanordnung unter anderem auch auf Grund ihrer größeren Dicke den gesamten Scheibenaufbau dennoch als Ganzes aufrecht erhalten, was ein Eindringen der Explosionsenergie in den zu schützenden Bereich hinein verhindert.

Dadurch, dass die erste Scheibenanordnung und/oder die zweite Scheibenanordnung jeweils eine Verbundscheibe aus mindestens zwei Scheiben ist bzw. sind, ist insbesondere die Sicherheit weiter vergrößert bzw. wird auch auf der Außenseite, d.h. der Angriffsseite, ein Splitterabgang vermieden.

Vorteilhafterweise ist die Dicke der dritten Scheibenanordnung auch größer als die Dicke der zweiten Scheibenanordnung.

Mehrere miteinander verklebte Scheiben können flexibler auf eine auf sie ausgeübte Kraft reagieren, da dünnere Glasscheiben zum einen in sich elastischer sind als dickere Glasscheiben und zum anderen die einzelnen Scheiben beim Durchbiegen wegen der zwischen ihnen liegenden Klebeschicht zueinander lateral in begrenztem Maße beweglich sind. Daher ist insbesondere vorgesehen, dass die dritte Scheibenanordnung aus mindestens drei Scheiben besteht, die miteinander jeweils mittels einer Klebeschicht verbunden sind. Hierdurch wird nicht nur die Wahrscheinlichkeit erhöht, dass mindestens eine der Scheiben der dritten Scheibenanordnung bei einem explosionsartigen Energieeintrag intakt bleibt, sondern die Klebeschichten verhindern außerdem, dass bei einer Zerstörung keine Teile von den Scheiben, insbesondere Splitter, in den Innenraum hinein abgehen.

Die dem zu schützenden Bereich zugewandte Scheibe der dritten Scheibenanordnung sollte dünner als die mindestens eine weitere Scheibe der dritten Scheibenanordnung sein.

Wird auf die dritte Scheibenanordnung in Richtung auf den Schutzbereich Druck ausgeübt, so sollte die Elastizität dieser innersten Scheibe im Vergleich zu den anderen Scheiben der dritten Scheibenanordnung am größten sein. Dies kann erreicht werden, indem man die Materialstärke dieser Scheibe im Vergleich zu den anderen, mit ihr verklebten Scheiben reduziert. Sollte zudem diese dünnere Scheibe zerstört werden, so ist im Vergleich zu einer dickeren Scheibe die Größe der erzeugten Glassplitter kleiner, was das Verletzungsrisiko von Personen, die sich im zu schützenden Bereich aufhalten, herabsetzt. Insbesondere soll daher diese dünnere Scheibe vorzugsweise eine Dicke von weniger als 5 mm, weiter vorzugsweise von weniger als 4 mm, noch weiter vorzugsweise eine Dicke von 3 mm oder weniger aufweisen.

Durch die 3-fach-Hintereinanderanordnung der Scheibenanordnungen und dem damit vorliegenden räumlichen Abstand zwischen der vorderen ersten Scheibenanordnung und der hinteren dritten Scheibenanordnung vergeht bei der Ausbreitung der explosionsbedingten Druckwelle während des gestuften Energieabbaus eine vergleichsweise lange Zeit, so dass der Impuls der Druckwelle nur noch vermindert auf die dritte Scheibenanordnung trifft. Der erfindungsgemäße Scheibenaufbau bewirkt zudem mit seiner verstärkten inneren, dritten Scheibenanordnung gleichzeitig auch eine Verbesserung der Einbruchhemmung.

Um die Explosionsenergie bei einer vorgegebenen Maximaldicke des gesamten Scheibenaufbaus möglichst effektiv zu absorbieren, ist es sinnvoll, wenn die Dicke der einzelnen Scheibenanordnungen in Richtung auf den zu schützenden Bereich zu vergrößert wird. Damit wird erreicht, dass die Druckwelle der Explosion, je näher sie dem Schutzbereich kommt, bei Abnahme der Explosionsenergie einen immer stärkeren Widerstand erfährt. Auch kann so gewährleistet werden, dass die zweite Scheibenanordnung die Durchbiegung der ersten Scheibenanordnung und die dritte Scheibenanordnung die Durchbiegung der ersten und der zweiten Scheibenanordnung auffangen kann. Eine Ausführungsform der Erfindung sieht daher vor, dass die Dicke der dritten Scheibenanordnung größer als die Dicke der zweiten Scheibenanordnung und diese wiederum größer als die Dicke der ersten Scheibenanordnung ist. Im Einzelnen soll die Dicke der dritten Scheibenanordnung mindestens 120 %, vorzugsweise mindestens 130 % der Dicke der zweiten Scheibenanordnung und die Dicke der zweiten Scheibenanordnung mindestens 120 %, vorzugsweise mindestens 130 % der Dicke der ersten Scheibenanordnung betragen.

Für eine möglichst hohe Schutzwirkung ist in einer Ausführungsform vorgesehen, dass die Dicke der Klebeschicht der Verbundscheiben mindestens 10 %, vorzugsweise mindestens 15 % der Dicke der jeweiligen Scheibenanordnung beträgt. Bei gleichzeitiger Ausbildung der ersten und/oder der zweiten Scheibenanordnung als Verbundsicherheitsglasscheiben wird die Wahrscheinlichkeit, dass sie sich bei einer Explosion durchbiegen, ohne zerstört zu werden, erhöht. Dabei spielt insbesondere auch die Dicke der Klebeschicht eine Rolle, da diese bei ausreichend hoher Klebeleistung zusätzlich gewährleisten soll, dass die miteinander verklebten Scheiben bei Deformation zumindest teilweise lateral gegeneinander beweglich sind.

Alternativ kann die erste Scheibenanordnung und/oder die zweite Scheibenanordnung jeweils eine einzige Scheibe aus gehärtetem Sicherheitsglas aufweisen. Dies ist dann sinnvoll, wenn entweder nicht ausreichend Raum für eine entsprechende Scheibenanordnung aus Verbundsicherheitsglas zur Verfügung steht, beziehungsweise wenn das Gewicht des gesamten Scheibenaufbaus eine Rolle spielt. Auch beim Einsatz von Alarmanlagen kann die Verwendung von Einscheibensicherheitsglas als erste Scheibenanordnung in Betracht gezogen werden. Auch bei beschichteten Gläsern, z.B. mit einer IR-reflektierenden Schicht zur Wärmeisolierung kann die Verwendung eines Einscheibenglases auf der Angriffsseite unumgänglich sein.

Zwischen den Scheibenanordnungen ist jeweils ein Zwischenraum vorgesehen, damit sich die Scheiben in begrenztem Maße durchbiegen können. Als vorteilhaft hat sich dabei ein Abstand zwischen den Scheibenanordnungen von 8 mm bis 20 mm, vorzugsweise von 12 mm bis 16 mm herausgestellt. Für die Dicke der ersten Scheibenanordnung haben sich Werte zwischen 7 mm und 12 mm und für die Dicke der zweiten Scheibenanordnung zwischen 11 mm und 22 mm als vorteilhaft erwiesen. Hierbei spielen sowohl ein höchstmöglicher Schutz als auch das Gewicht des gesamten Scheibenaufbaus eine Rolle.

Die Klebeschichten zwischen den einzelnen Scheiben der Scheibenanordnungen sollen aus PVB-Folie bestehen, die eine Dicke von mindestens 1,0 mm, vorzugsweise mindestens 1,2 mm, weiter vorzugsweise mindestens 1,5 mm aufweisen. Polyvinylbutyral (PVB) zeichnet sich durch seine hohe Reißfestigkeit aus und besitzt zudem durch seine hohe Klebekraft eine hohe splitterbindende Wirkung.

Des Weiteren ist es vorteilhaft, wenn die Dicke der der Schutzseite zugewandten Klebeschicht der dritten Scheibenanordnung größer ist als die Dicken der übrigen Klebeschichten der dritten Scheibenanordnung, da sich hieraus eine vergrößerte Elastizität bzw. "Weichheit" der innersten Scheibe ergibt.

Eine Folge von Explosionen sind oft Brände. Um ganz allgemein Brandschutzanforderungen erfüllen zu können und insbesondere zu vermeiden, dass das Feuer nach einer Explosion in den zu schützenden Bereich eindringen kann, ist es vorteilhaft, wenn mindestens eine Scheibenanordnung, vorzugsweise die zweite Scheibenanordnung, eine Schicht aus einem transparenten Brandschutzgel, vorzugsweise aus Natriumsilikat (Wasserglas) aufweist, wobei das Brandschutzgel jeweils zwischen zwei Scheiben angeordnet ist. Damit kann die erste Scheibenanordnung einen Teil der Explosionsenergie aufnehmen, während die zweite Scheibenanordnung als Hitzeschutz für die dritte Scheibenanordnung dient, die wiederum als mechanischer Schutz für den Innenraum dient. Sollte ein Feuer im Innenraum ausbrechen, kann die aus Brandschutzglas bestehende zweite Scheibenanordnung umgekehrt auch die erste Scheibenanordnung vor der Hitzeeinwirkung schützen.

Damit nicht die wärmeisolierenden Eigenschaften des gesamten Scheibenaufbaus verloren gehen, ist weiterhin vorgesehen, dass mindestens ein Zwischenraum zwischen den Scheibenanordnungen mit einem Gas mit niedrigem Wärmedurchgangskoeffizienten, insbesondere mit Argon oder Krypton, gefüllt ist. Zur Vermeidung von Verlusten von diesem wärmeisolierendem Gas, ist vorgesehen, dass der gasgefüllte Zwischenraum abgeschlossen ist. Er soll außerdem mit den Scheibenanordnungen in einem gemeinsamen Rahmen eingesetzt sein.

Gleichzeitig soll sich der zu schützende Innenraum aber durch Sonnenlichteinstrahlung nicht zu sehr aufheizen. Darum soll mindestens eine Scheibe, die aus gehärtetem beziehungsweise teilgehärtetem Floatglas mit einer Infrarotstrahlung reflektierenden Beschichtung versehen sein. Wegen ihrer hohen Bruchsicherheit kann eine Scheibe auch aus Polyacryl oder vorzugsweise aus Polycarbonat bestehen.

### Ausführungsbeispiele

Im folgenden wird die Erfindung anhand der in den Figuren dargestellten Ausführungsbeispiele für eine sprengwirkungshemmende Isolierglasscheibe näher beschrieben.

Es zeigen:
- Figur 1:: eine Außenansicht einer sprengwirkungshemmenden Isolierverglasung,
- Figur 2:: einen Querschnitt durch die sprengwirkungshemmende Isolierverglasung ge- mäß Figur 1: die innere Scheibenanordnung besteht aus Dreifach- Verbundsicherheitsglas (VSG)
- Figur 3:: einen Querschnitt durch die sprengwirkungshemmende Isolierverglasung ge- mäß Figur 2: Lage der Scheibenanordnungen bei einer Explosion,
- Figur 4:: einen Querschnitt durch die sprengwirkungshemmende Isolierverglasung ge- mäß Figur 1: die mittlere Scheibenanordnung besteht aus Brandschutzglas,
- Figur 5:: einen Querschnitt durch die sprengwirkungshemmende Isolierverglasung ge- mäß Figur 1: die innere Scheibenanordnung besteht aus VSG und Brand- schutzglas,
- Figur 6:: einen Querschnitt durch die sprengwirkungshemmende Isolierverglasung ge- mäß Figur 1: die äußere Scheibenanordnung besteht aus ESG,
- Figur 7:: einen Querschnitt durch die sprengwirkungshemmende Isolierverglasung ge- mäß Figur 6: Lage der Scheibenanordnungen bei einer Explosion sowie Zerstö- rung der äußeren ESG,
- Figur 8:: einen Querschnitt durch die sprengwirkungshemmende Isolierverglasung ge- mäß Figur 1: die äußere Scheibenanordnung besteht aus ESG und ist mit einer Infrarotstrahlungs-Schutzschicht beschichtet.

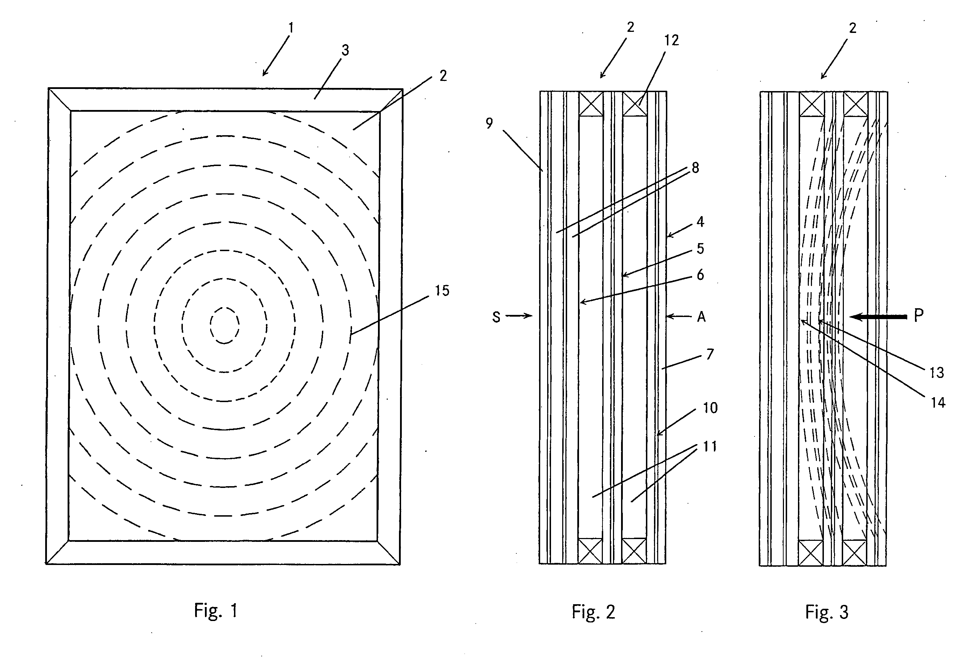

Figur 1 zeigt eine Außenansicht einer sprengwirkungshemmenden Isolierverglasung 1, bei der ein Scheibenaufbau 2 von einem Rahmen 3 gehaltert wird. Dieser Scheibenaufbau 2 wird in den Figuren 2 bis 8 in verschiedenen Ausführungsformen im Querschnitt detailliert dargestellt. Die gestrichelten Linien 15 in Figur 1 sollen schematisch die durch den bei einer Explosion entstandenen Druck verursachte Durchbiegung des Scheibenaufbaus 2 darstellen.

Die in Figur 2 gezeigte Ausführungsform des Scheibenaufbaus 2 mit einer Innen- oder Schutzseite S und einer Angriffs- oder Außenseite A besteht aus drei parallel zueinander angeordneten Scheibenanordnungen 4, 5 und 6. Die äußere Scheibenanordnung 4 und die mittlere Scheibenanordnung 5 bestehen jeweils aus zwei zusammengeklebten ca. 4 mm dicken Scheiben 7, während die innere Scheibenanordnung 6 aus zwei ca. 6 mm dicken Scheiben 8 und einer ca. 4 mm dicken Scheibe 9 ebenfalls klebend zusammen gesetzt ist. Die Dicke der Scheiben 7 der Scheibenanordnungen 4 und 5 kann jedoch auch größer ausfallen. Die Scheibe 9, die sich auf der Schutzseite S des Scheibenaufbaus 2 befindet, besitzt gegenüber den Scheiben 8 deswegen eine geringere Dicke, damit sie zum einen elastischer ist und bei einer Explosion der durch den Druck hervorgerufenen Durchbiegung leichter nachgeben kann, zum anderen, damit im Falle des Zerbrechens der Scheibe 9 die Splittergröße und somit deren Masse reduziert wird. Aufgrund ihrer geringeren Masse kann der Splitterabgang in den Schutzbereich vermieden werden, was eine mögliche Verletzungsgefahr für Personen, die sich im Schutzbereich aufhalten, erheblich verringern kann. Als Scheibenmaterial soll in der Regel handelsübliches Flachglas (Floatglas) zum Einsatz kommen. In besonderen Fällen können jedoch einzelne Scheiben, insbesondere beim äußeren und mittleren Scheibenaufbau 4 und 5, auch aus gehärtetem Sicherheitsglas oder aber, insbesondere beim inneren Scheibenaufbau 6, die dem Schutzbereich zugewandte Scheibe 9 aus Polycarbonat bestehen. Polycarbonat als Scheibenmaterial bietet den Vorteil, dass es keine Splitterbildung verursacht. Eine Kunststoffscheibe kann aus Gründen des verbesserten Kratzschutzes auch als mittlere oder einem Zwischenraum zugewandte Scheibe in einem Verbund angeordnet sein, so dass die dem Rauminnern zugewandte Scheibe 9 aus Glas besteht und problemlos gereinigt werden kann.

Zwischen den Scheiben 7 der Scheibenanordnungen 4 und 5 sowie zwischen den beiden Scheiben 8 und zwischen der Scheibe 8 und der Scheibe 9 der Scheibenanordnung 6 befindet sich jeweils eine ca. 1,5 mm dicke Klebeschicht 10 aus Polyvinylbutyral (PVB). Dieses Polymer ist bekannt für seine hohe Reißfestigkeit und zeichnet sich zudem auf grund seiner hohen Klebeleistung durch seine splitterbindende Wirkung aus. Die Dicke der Klebeschicht richtet sich dabei vor allem nach der Dicke der verwendeten Scheiben 7, 8 und 9 der Scheibenanordnungen 4, 5 und 6 und muss für ein zerstörungsfreies Durchbiegen wenigstens der Scheibenanordnungen 4 und 5 mindestens 1/10 der jeweiligen einzelnen Glasstärke betragen.

Die einzelnen Scheibenanordnungen 4, 5 und 6 werden durch Zwischenräume 11 getrennt, die in bekannter Weise von Abstandshaltern 12 im Randbereich der Scheibenanordnungen 4, 5 und 6 aufrechterhalten werden. Die Breite der Zwischenräume 11 soll vorzugsweise bei 12 mm liegen. Um gleichzeitig wärme- und schallisolierende Eigenschaften zu erhalten, sollen diese Zwischenräume 11 mit einem Gas befüllt werden, das einen niedrigen Wärmedurchgangskoeffizienten aufweist. Hierfür kommen zum Beispiel die Edelgase Argon oder Krypton in Frage.

In Figur 3 ist das Verhalten des Scheibenaufbaus 2 aus Figur 2 bei einer Explosion dargestellt. Trifft eine Druckwelle P einer Explosion auf die Außenseite A des Scheibenaufbaus 2, so wird die äußere Scheibenanordnung 4 in Richtung auf den zu schützenden Bereich zu gebogen. In einem Bereich 13 trifft die Scheibenanordnung 4 auf die Scheibenanordnung 5 und drückt diese wiederum gegen die Scheibenanordnung 6, wo sie sich in einem Bereich 14 an dieser abstützt. Um die jeweiligen vorgelagerten Scheibenanordnungen 4 beziehungsweise 5 während ihres Durchbiegens bei einer Explosion auffangen zu können, muss die zweite Scheibenanordnung 5 daher um mindestens 20 % dicker als die erste Scheibenanordnung 4 und die dritte Scheibenanordnung 6 um ebenfalls mindestens 20 % dicker als die zweite Scheibenanordnung 5 sein. Für eine ausreichend hohe Sicherheit sollten diese Scheibenanordnungen 5 und 6 jedoch eine um mindestens 30 % größere Dicke aufweisen als ihre jeweils vorgelagerte Scheibenanordnung 4 beziehungsweise 5. Sollten im Extremfall bei einer Explosion eine oder gar beide der Scheibenanordnungen 4 oder 5 zerstört werden, so wird der gesamte Scheibenaufbau 2 durch die dann noch intakte Scheibenanordnung 6 weiterhin aufrechterhalten. Die durchgebogenen Scheibenanordnungen 4 und 5 sind in Figur 3 schematisch als gestrichelte Linien dargestellt. Es versteht sich von selbst, dass auch die innere Scheibenanordnung 6 bei der Einwirkung einer Druckwelle eine Durchbiegung erfahren kann. Schlimmstenfalls darf diese Durchbiegung jedoch zu einer Rissbildung in den Scheiben 8 und 9 der Scheibenanordnung 6 führen, keinesfalls dagegen zu ihrer totalen Zerstörung oder zu einem Splitterabgang in den Schutzbereich hinein.

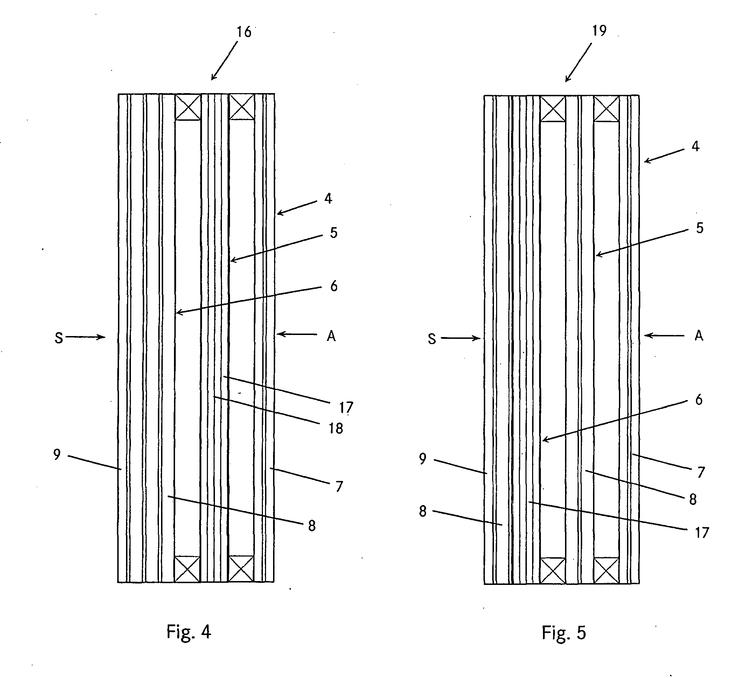

In Folge von Explosionen entstehen oft Brände. Daher ist es sinnvoll, bei mindestens einer der Scheibenanordnungen 4, 5 oder 6 des Scheibenaufbaus 2 ganz oder teilweise für Brandschutzeigenschaften zu sorgen. In Figur 4 ist ein Scheibenaufbau 16 gezeigt, bei dem die mittlere Scheibenanordnung 5 aus einer Scheibe 17 aus Brandschutzglas besteht. Die Scheiben dieser Scheibenanordnung 5 werden durch eine transparente, hitzebeständige Klebeschicht 18, in der Regel aus Natriumsilikat (Wasserglas), zusammengehalten. Damit der Explosionsschutz nicht verloren geht, besteht die innere Scheibenanordnung 6 in diesem Scheibenaufbau 16 aus drei 6 mm dicken Scheiben 8 und einer innersten, 4 mm dicken Scheibe 9. Wie beim Scheibenaufbau 2 in den Figuren 2 und 3 bilden auch hier zwei 4 mm dicke Scheiben 7 die äußere Scheibenanordnung 4.

Ein weiterer, alternativer Scheibenaufbau 19 ist in Figur 5 dargestellt, bei dem ein Teil der inneren Scheibenanordnung 6 aus Brandschutzglas 17 besteht. Vorzugweise wird dafür die äußerste der drei Scheiben dieser inneren Scheibenanordnung 6 gewählt, damit zum zu schützenden Innenbereich hin weiter eine explosionshemmende Scheibenkombination als Tragestruktur besteht. Auch bei diesem Scheibenaufbau 19 besteht die äußere Scheibenanordnung 4 aus zwei 4 mm dicken Scheiben 7, während die mittlere Scheibenanordnung 5 zur Aufrecherhaltung des Explosionsschutzes aus zwei 6 mm starken Scheiben 8 zusammengesetzt ist.

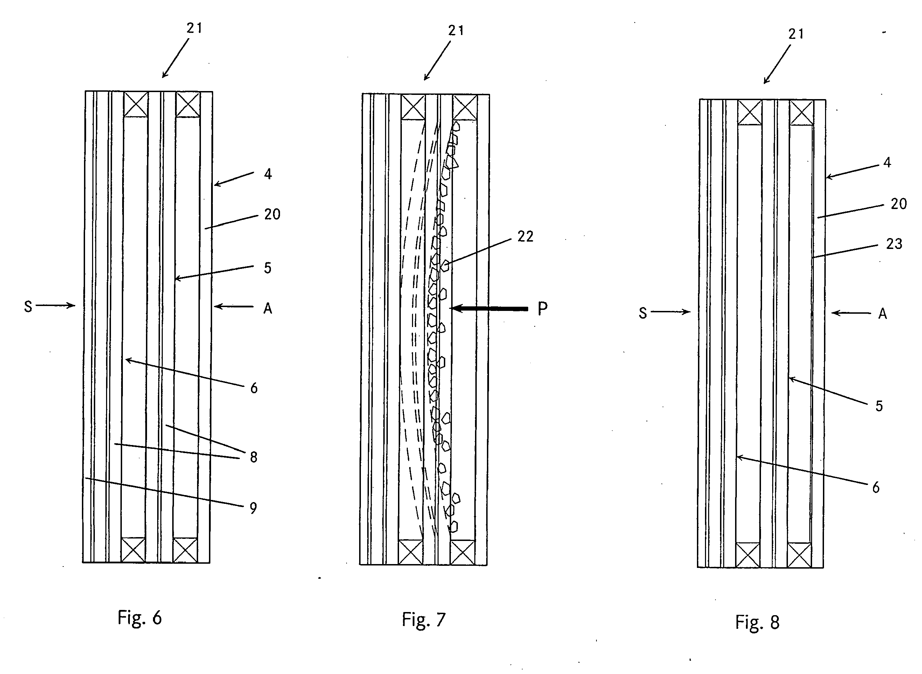

In Bereichen, in denen ein dünnerer beziehungsweise leichterer Scheibenaufbau erforderlich ist, kann zum Beispiel eine Scheibenanordnung, vorzugsweise die äußere Scheibenanordnung 4, aus einer Scheibe 20 aus Einscheibensicherheitsglas (ESG) bestehen, wie in den Figuren 6 bis 8 mit einen Scheibenaufbau 21 gezeigt. Eine solche Scheibe aus gehärtetem, thermisch vorgespanntem Glas setzt der Druckwelle P einer Explosion zuerst einen erhöhten Widerstand entgegen. Wird ein bestimmter Druck überschritten, wird die Scheibe aus solchem Einscheibensicherheitsglas zerstört und zerfällt, wie in Figur 7 gezeigt, in kleine, abgerundete Splitter 22, bei denen im Vergleich zu normalem Flachglas ein erheblich geringeres Verletzungsrisiko besteht. Um ein Aufheizen des Schutzbereichs durch Sonnenlichteinstrahlung zu vermeiden, kann die äußere Scheibenanordnung 4, wie in Figur 8 dargestellt, auf ihrer Innenseite noch zusätzlich mit einer Beschichtung 23 zur Reflexion von Infrarotstrahlung versehen werden.

### Bezugszeichenliste

- 1: Isolierverglasung
- 2: Scheibenaufbau
- 3: Rahmen
- 4: äußere Scheibenanordnung
- 5: mittlere Scheibenanordnung
- 6: innere Scheibenanordnung
- 7: Scheibe
- 8: Scheibe
- 9: Scheibe
- 10: Klebeschicht
- 11: Zwischenraum
- 12: Abstandshalter
- 13: Bereich
- 14: Bereich
- 15: Linie
- 16: Scheibenaufbau
- 17: Scheibe
- 18: Klebeschicht
- 19: Scheibenaufbau
- 20: Scheibe
- 21: Scheibenaufbau
- 22: Splitter
- 23: Beschichtung
- A: Außen- bzw. Angriffsseite
- S: Innen- bzw. Schutzseite
- P: Druckwelle

## Patentansprüche

1. Scheibenaufbau (2, 16, 19, 21) mit einer ersten, einer Angriffsseite (A) zugewandten Scheibenanordnung (4), einer zweiten Scheibenanordnung (5), die durch einen ersten gasgefüllten Zwischenraum (11) von der ersten Scheibenanordnung (4) getrennt ist und einer dritten, einer Schutzseite (S) zugewandten Scheibenanordnung (6), die durch einen zweiten gasgefüllten Zwischenraum (11) von der zweiten Scheibenanordnung (5) getrennt ist, wobei alle Scheibenanordnungen (4, 5, 6) parallel zu einander verlaufen und mittels randseitig umlaufender Abstandhalter (12) miteinander verbunden sind, und wobei zumindest die dritte Scheibenanordnung (6) eine Verbundscheibe ist, die aus mindestens zwei, jeweils mittels einer Klebeschicht (10) miteinander verbundenen Scheiben (8, 9) besteht, **dadurch gekennzeichnet, dass** die Dicke der dritten Scheibenanordnung (6) größer als die Dicke der ersten Scheibenanordnung (4) ist und dass, die erste Scheibenanordnung (4) und/oder die zweite Scheibenanordnung (5) jeweils eine Verbundscheibe aus mindestens zwei Scheiben (7, 8) ist bzw. sind.

2. Scheibenaufbau (2, 16, 19, 21) nach Anspruch 1, **dadurch gekennzeichnet, dass** die Dicke der dritten Scheibenanordnung (6) größer als die Dicke der zweiten Scheibenanordnung (5) ist.

3. Scheibenaufbau (2, 16, 19, 21) nach Anspruch 1, **dadurch gekennzeichnet, dass** die dritte Scheibenanordnung (6) aus mindestens drei Scheiben (8, 9) besteht, die miteinander jeweils mittels einer Klebeschicht (10) verbunden sind.

4. Scheibenaufbau (2, 16, 19, 21) nach einem der Ansprüche 1 bis 3, **dadurch gekennzeichnet, dass** die der Schutzseite (S) zugewandte Scheibe (9) der dritten Scheibenanordnung (6) dünner als die mindestens eine weitere Scheibe (8) der dritten Scheibenanordnung (6) ist und vorzugsweise eine Dicke von weniger als 5 mm, weiter vorzugsweise von weniger als 4 mm, noch weiter vorzugsweise eine Dicke von 3 mm oder weniger aufweist.

5. Scheibenaufbau (2, 16, 19, 21) nach einem der Ansprüche 1 bis 4, **dadurch gekennzeichnet, dass** die Dicke der dritten Scheibenanordnung (6) größer als die Dicke der zweiten Scheibenanordnung (5) und die Dicke der zweiten Scheibenanordnung (5) größer als die Dicke der ersten Scheibenanordnung (4) ist.

6. Scheibenaufbau (2, 16, 19, 21) nach Anspruch 5, **dadurch gekennzeichnet, dass** die Dicke der dritten Scheibenanordnung (6) mindestens 120 %, vorzugsweise mindestens 130 % der Dicke der zweiten Scheibenanordnung (5) und letztere Dicke mindestens 120 %, vorzugsweise mindestens 130 % der Dicke der ersten Scheibenanordnung (4) beträgt.

7. Scheibenaufbau (2,16,19,21) nach einem der Ansprüche 1 bis 6, **dadurch gekennzeichnet, dass** die Dicke der Klebeschicht (10) oder Klebeschichten der Verbundscheibe mindestens 10 %, vorzugsweise mindestens 15 %, der Dicke der jeweiligen Scheibenanordnung (4, 5, 6) beträgt.

8. Scheibenaufbau (2, 16, 19, 21) nach einem der Ansprüche 1 bis 5, **dadurch gekennzeichnet, dass** die erste Scheibenanordnung (4) und/oder die zweite Scheibenanordnung (5) jeweils eine einzige Scheibe (20) aus gehärtetem Sicherheitsglas aufweist bzw. aufweisen.

9. Scheibenaufbau (2, 16, 19, 21) nach einem der Ansprüche 1 bis 7, **dadurch gekennzeichnet, dass** die Dicke des ersten Zwischenraums (11) und/oder des zweiten Zwischenraums (11) zwischen 8 mm und 20 mm, vorzugsweise ca. 12 mm bis 16 mm beträgt.

10. Scheibenaufbau (2, 16, 19, 21) nach einem der Ansprüche 1 bis 8, **dadurch gekennzeichnet, dass** die Dicke der ersten Scheibenanordnung (4) zwischen 7 mm und 12 mm und die Dicke der zweiten Scheibenanordnung (5) zwischen 11 mm und 22 mm.

11. Scheibenaufbau (2, 16, 19, 21) nach einem der Ansprüche 1 bis 9, **dadurch gekennzeichnet, dass** die Klebeschichten (10) als PVB-Folien ausgebildet sind und eine Dicke von mindestens 1,0 mm, vorzugsweise mindestens 1,2 mm, weiter vorzugsweise mindestens 1,5 mm aufweisen.

12. Scheibenaufbau (2, 16, 19, 21) nach einem der Ansprüche 1 bis 10, **dadurch gekennzeichnet, dass** mindestens eine Scheibenanordnung (4, 5, 6), vorzugsweise die zweite Scheibenanordnung (5), eine Schicht (18) aus einem transparenten Brandschutzgel, vorzugsweise aus Natriumsilikat aufweist, wobei das Brandschutzgel zwischen zwei Scheiben angeordnet ist.

13. Scheibenaufbau (2, 16, 19, 21) nach einem der Ansprüche 1 bis 11, **dadurch gekennzeichnet, dass** mindestens ein Zwischenraum (11) mit einem Gas mit niedrigem Warmeleitungskoeffizienten, insbesondere mit Argon oder Krypton, gefüllt ist.

14. Scheibenaufbau (2, 16, 19, 21) nach einem der Ansprüche 1 bis 12, **dadurch gekennzeichnet, dass** mindestens eine Scheibe (7, 8, 9, 20) aus Floatglas oder gehärtetem Sicherheitsglas oder aus Polyacryl oder aus Polycarbonat besteht und/oder mit einer Infrarotstrahlung reflektierende Beschichtung (23)versehen ist.

15. Scheibenaufbau (2, 16, 19, 21) nach einem der Ansprüche 1 bis 13, **dadurch gekennzeichnet, dass** der Zwischenraum (11) abgeschlossen ist und er in einem gemeinsamen Rahmen (3) eingesetzt ist.

## Claims

1. A glazing structure (2, 16, 19, 21) comprising a first glazing arrangement (4) which faces an attack side (A), a second glazing arrangement (5) which is separated from the first glazing arrangement (4) by a first gas-filled intermediate space (11), and a third glazing arrangement (6) which faces a protection side (S) and which is separated from the second glazing arrangement (5) by a second gas-filled intermediate space (11), wherein all glazing arrangements (4, 5, 6) extend parallel to one another and are connected to one another by means of spacers (12) circumferentially extending along the edge side, and wherein at least the third glazing arrangement (6) is a composite pane which consists of at least two panes (8, 9) which are connected to one another each by means of an adhesive layer (10), **characterized in that** the thickness of the third glazing arrangement (6) is greater than the thickness of the first glazing arrangement (4) and that the first glazing arrangement (4) and/or the second glazing arrangement (5) each are/is a composite pane consisting of at least two panes (7, 8).

2. The glazing structure (2, 16, 19, 21) according to claim 1, **characterized in that** the thickness of the third glazing arrangement (6) is grater than the thickness of the second glazing arrangement (5).

3. The glazing structure (2, 16, 19, 21) according to claim 1, **characterized in that** the third glazing arrangement (6) consists of at least three panes (8, 9) which are connected to one another each by means of an adhesive layer (10).

4. The glazing structure (2, 16, 19, 21) according to any one of the claims 1 to 3, **characterized in that** the third glazing arrangement's (6) pane (9) facing the protection side (S) is thinner than the at least one further pane (8) of the third glazing arrangement (6) and preferably has a thickness of less than 5 mm, further preferably of less than 4 mm, still further preferably has a thickness of 3 mm or less.

5. The glazing structure (2, 16, 19, 21) according to any one of the claims 1 to 4, **characterized in that** the thickness of the third glazing arrangement (6) is greater than the thickness of the second glazing arrangement (5) and the thickness of the second glazing arrangement (5) is greater than the thickness of the first glazing arrangement (4).

6. The glazing structure (2, 16, 19, 21) according to claim 5, **characterized in that** the thickness of the third glazing arrangement (6) is at least 120 %, preferably at least 130 % of the thickness of the second glazing arrangement (5), and the latter thickness is at least 120 %, preferably at least 130 % of the thickness of the first glazing arrangement (4).

7. The glazing structure (2, 16, 19, 21) according to any one of the claims 1 to 6, **characterized in that** the thickness of the adhesive layer (10) or adhesive layers of the composite pane is at least 10 %, preferably at least 15 % of the thickness of the respective glazing arrangement (4, 5, 6).

8. The glazing structure (2, 16, 19, 21) according to any one of the claims 1 to 5, **characterized in that** the first glazing arrangement (4) and/or the second glazing arrangement (5) each have/has one single pane (20) made of toughened safety glass.

9. The glazing structure (2, 16, 19, 21) according to any one of the claims 1 to 7, **characterized in that** the thickness of the first intermediate space (11) and/or the second intermediate space (11) is between 8 mm and 20 mm, preferably approx. 12 mm to 16 mm.

10. The glazing structure (2, 16, 19, 21) according to any one of the claims 1 to 8, **characterized in that** the thickness of the first glazing arrangement (4) is between 7 mm and 12 mm and the thickness of the second glazing arrangement (5) is between 11 mm and 22 mm.

11. The glazing structure (2, 16, 19, 21) according to any one of the claims 1 to 9, **characterized in that** the adhesive layers (10) are configured as PVB film and have a thickness of at least 1.0 mm, preferably at least 1.2 mm, further preferably at least 1.5 mm.

12. The glazing structure (2, 16, 19, 21) according to any one of the claims 1 to 10, **characterized in that** at least one glazing arrangement (4, 5, 6), preferably the second glazing arrangement (5), has a layer of a transparent fire-resistant gel, preferably sodium silicate, wherein the fire-resistant gel is arranged between two panes.

13. The glazing structure (2, 16, 19, 21) according to any one of the claims 1 to 11, **characterized in that** at least one intermediate space (11) is filled with a gas having a low thermal conductivity coefficient, in particular with argon or krypton.

14. The glazing structure (2, 16, 19, 21) according to any one of the claims 1 to 12, **characterized in that** at least one pane (7, 8, 9, 20) consists of float glass, or toughened safety glass, or polyacrylics, or polycarbonate and/or is provided with a coating (23) which reflects infrared radiation.

15. The glazing structure (2, 16, 19, 21) according to any one of the claims 1 to 13, **characterized in that** the intermediate space (11) is closed and is integrated in a common frame (3).

## Revendications

1. Vitrage (2, 16, 19, 21) avec un premier agencement de vitres (5) faisant face à un côté d'actionnement (A), un deuxième agencement de vitres (5) qui est séparé par un espace rempli de gaz (11) du premier agencement de vitres (4) et un troisième agencement de vitres (6) faisant face à un côté sécurité (S) qui est séparé par un deuxième espace rempli de gaz (11) du deuxième agencement de vitres (5), tous les agencements de vitres (4, 3, 6) s'étendant à la parallèle les uns des autres et étant assemblés les uns aux autres au moyen d'un écarteur périphérique marginal (12) et au moins le troisième agencement de vitres (6) étant une vitre composite, consistant dans aux moins deux vitres (8, 9) assemblées l'une à l'autre chaque fois au moyen d'une couche d'adhésif (10), **caractérisé en ce que** l'épaisseur du troisième agencement de vitres (6) est supérieure à l'épaisseur du premier agencement de vitres (4) et **en ce que** le premier agencement de vitres (4) et/ou le deuxième agencement de vitres (5) est ou sont chacun une vitre composite comprenant au moins deux vitres (7, 8).

2. Vitrage (2, 16, 19, 21) selon la revendication 1, **caractérisé en ce que** l'épaisseur du troisième agencement de vitres (6) est supérieure à l'épaisseur du deuxième agencement de vitres (5).

3. Vitrage (2, 16, 19, 21) selon la revendication 1, **caractérisé en ce que** le troisième agencement de vitres (6) se compose d'au moins trois vitres (8, 9) qui sont chacune assemblées l'une sur l'autre au moyen d'une couche d'adhésif (10).

4. Vitrage (2, 16, 19, 21) selon l'une quelconque des revendications 1 à 3, **caractérisé en ce que** la vitre (9) du troisième agencement de vitres (6) faisant face au côté sécurité (S) est plus mince que l'au moins une vitre (8) supplémentaire du troisième agencement de vitres (6) et a de préférence une épaisseur inférieure à 5 mm, de façon plus préférée, inférieure à 4 mm, de façon encore plus préférée, une épaisseur de 3 mm ou inférieure.

5. Vitrage (2, 16, 19, 21) selon l'une quelconque des revendications 1 à 4, **caractérisé en ce que** l'épaisseur du troisième agencement de vitres (6) est supérieure à l'épaisseur du deuxième agencement de vitres (5) et l'épaisseur du deuxième agencement de vitres (5) est supérieure à l'épaisseur du premier agencement de vitres (4).

6. Vitrage (2, 16, 19, 21) selon la revendication 5, **caractérisé en ce que** l'épaisseur du troisième agencement de vitres (6) correspond à au moins 120 %, de préférence à au moins 130 % de l'épaisseur du deuxième agencement de vitres (5) et cette dernière épaisseur correspond à au moins 120 %, de préférence à au moins 130 % de l'épaisseur du premier agencement de vitres (4).

7. Vitrage (2, 16, 19, 21) selon l'une quelconque des revendications 1 à 6, **caractérisé en ce que** l'épaisseur de la couche d'adhésif (10) ou des couches d'adhésif de la vitre composite correspond à au moins 10 %, de préférence à au moins 15 %, de l'épaisseur de l'agencement de vitres (4, 5, 6) concerné.

8. Vitrage (2, 16, 19, 21) selon l'une quelconque des revendications 1 à 5, **caractérisé en ce que** le premier agencement de vitres (4) et/ou le deuxième agencement de vitres (5) comporte ou comportent chacun une unique vitre (20) en verre de sécurité trempé.

9. Vitrage (2, 16, 19, 21) selon l'une quelconque des revendications 1 à 7, **caractérisé en ce que** l'épaisseur du premier espace (11) et/ou du deuxième espace (11) est comprise entre 8 mm et 20 mm, de préférence entre environ 12 mm et 16 mm.

10. Vitrage (2, 16, 19, 21) selon l'une quelconque des revendications 1 à 8, **caractérisé en ce que** l'épaisseur du premier agencement de vitres (4) est comprise entre 7 mm et 12 mm et l'épaisseur du deuxième agencement de vitres (5) est comprise entre 11 mm et 22 mm.

11. Vitrage (2, 16, 19, 21) selon l'une quelconque des revendications 1 à 9, **caractérisé en ce que** les couches d'adhésif (10) sont conçues sous la forme de films de PVB (butyral de polyvinyle) et ont une épaisseur d'au moins 1,0 mm, de préférence d'au moins 1,2 mm, de façon plus préférée d'au moins 1,5 mm.

12. Vitrage (2, 16, 19, 21) selon l'une quelconque des revendications 1 à 10, **caractérisé en ce qu'**au moins un agencement de vitres (4, 5, 6), de préférence le deuxième agencement de vitres (5), comporte une couche (18) d'un gel ignifuge, de préférence du silicate de sodium, le gel ignifuge étant disposé entre deux vitres.

13. Vitrage (2, 16, 19, 21) selon l'une quelconque des revendications 1 à 11, **caractérisé en ce qu'**au moins un espace (11) est rempli d'un gaz à faible coefficient de conductibilité thermique, notamment d'argon ou de krypton.

14. Vitrage (2, 16, 19, 21) selon l'une quelconque des revendications 1 à 12, **caractérisé en ce qu'**au moins une vitre (7, 8, 9, 20) est en verre flotté ou en verre de sécurité trempé ou en acrylique ou en polycarbonate et/ou est munie d'un revêtement (23) réfléchissant les infrarouges.

15. Vitrage (2, 16, 19, 21) selon l'une quelconque des revendications 1 à 13, **caractérisé en ce que** l'espace (11) est clos et **en ce qu'**il est inséré dans un cadre (3) commun.
